# EUROPEAN PATENT APPLICATION

(11) **EP 4 722 312 A1**
(43) Date of publication of application: **08.04.2026**
(21) Application number: 24814114.5
(22) Date of filing: 06.05.2024
(51) Int. Cl.: C09D 11/52, C09D 11/102, C09D 11/033, G02F 1/155

(54) **CONDUCTIVE INK, PREPARATION METHOD THEREFOR AND USE THEREOF**

(30) Priority: 31.05.2023 CN 202310637931
(71) Applicant: Shenzhen Guangyi Tech Co., Ltd., Shenzhen, Guangdong 518000 (CN)
(72) Inventor: YUAN, Lupan, Shenzhen, Guangdong 518000 (CN)
(74) Representative: KIPA AB
(86) International application number: PCT/CN2024/091285
(87) International publication number: WO 2024/244909

(57) **Abstract**

A conductive ink, a preparation method and application thereof are provided and relate to the field of conductive ink technology. The conductive ink includes the following components in weight percentage, based on a total weight of the conductive ink being 100%: 1% to 85% of an organic conductive material, and 15% to 99% of a solvent. The solvent has a boiling point lower than or equal to 150°C. The conductive ink provided in the present application includes the organic conductive material and the solvent. Since the solvent having a boiling point lower than or equal to 150°C, the conductive ink of the present application not only dries quickly during coating and has high production efficiency, but also forms a transparent conductive film layer that is uniform, flat, and dense, and has good product quality.

## Description

### CROSS-REFERENCE TO RELATED APPLICATIONS

This application claims the priority of the Chinese patent application submitted to the CNIPA on May 31, 2023, with an application number 202310637931.1 and titled "CONDUCTIVE INK AND PREPARATION METHODAND APPLICATION THEREOF", the entire contents of which are incorporated by reference in this application.

### TECHNICAL FIELD

The present application relates to the technical field of conductive ink technology, and in particular to a conductive ink, a preparation method, and an application thereof.

### BACKGROUND

Conductive materials are key components of optoelectronic devices, such as light-emitting diodes, solar cells, electrochromic devices, touch screens, defrosting windows, and electromagnetic shielding. Among various types of conductive materials, the inorganic conductive material indium tin oxide (ITO) occupies the main market of conductive materials in the world due to its excellent optical transmittance in the visible light region and outstanding electrical properties. However, the thin film formed by ITO has drawbacks such as high rigidity, high brittleness and low stress, which cannot meet the development needs of roll-to-roll product manufacturing processes and flexible products. In addition, the indium contained in ITO is a rare earth element with scarce reserves. As the market demand for ITO increases, the price of indium has soared, and the supply of indium has gradually highly constrained.

Therefore, it is urgent to develop high-performance and low-cost substitutes for ITO, such as metal mesh, carbon nanotubes, graphene, metal oxides, and organic conductive materials. Organic conductive materials are favored because of their advantages, such as solution processability, mechanical robustness, and low cost. For example, n-type conductive polymers, as a kind of organic conductive material, simultaneously exhibit efficient electron transport and high carrier concentration, so that the film fabricated from n-type conductive polymers has excellent electrical properties and high transmittance, both of which are comparable to those of ITO.

In the existing technology, in order to prepare films containing organic conductive materials, polar aprotic solvents such as N, N- dimethylformamide (DMF) and dimethyl sulfoxide (DMSO) are usually used to dissolve the organic conductive materials, such as n-type conductive polymers. However, the solvents need to be evaporated during the film formation process. These solvents exhibit high boiling points and low saturated vapor pressures at room temperature, which lead to slow evaporation and long drying times. Thus, overnight operations are often required, which severely impacts the production efficiency.

### SUMMARY

It is an objective of the present application to provide a conductive ink, a preparation method, and an application thereof, aiming to solve the problems of slow evaporation rate and low working efficiency of the existing conductive inks due to the use of high-boiling-point solvents.

In order to achieve the above purposes of the present application, the following technical solutions are adopted by the present application:

In the first aspect, the present application provides a conductive ink, which comprises the following components in weight percentage, based on a total weight of the conductive ink being 100%: 1% to 85% of an organic conductive material, and 15% to 99% of a solvent; wherein, the solvent is a solvent with a boiling point of lower than or equal to 150°C.

In a second aspect, the present application provides a preparation method of a conductive ink, comprising: providing the components of the conductive ink of the present application; mixing the organic conductive material and the solvent to obtain the conductive ink.

In a third aspect, the present application provides a conductive film, which is formed from the conductive ink provided by the present application or from the conductive ink prepared by the preparation method provided by the present application.

In a fourth aspect, the present application provides a conductive substrate, comprising: a substrate layer, and an electrode layer arranged on the substrate layer. The electrode layer comprises the conductive film provided by the present application.

In a fifth aspect, the present application provides an electrochromic film. The electrochromic film comprises: a first substrate layer, a first electrode layer, an electrochromic medium layer, a second electrode layer, and a second substrate layer stacked in sequence, wherein, at least one of the first electrode layer and the second electrode layer comprises the conductive film provided by the present application. Or alternatively, the electrochromic film comprises: a first substrate layer, a first electrode layer, an electrolyte layer, an electrochromic layer, a second electrode layer, and a second substrate layer stacked in sequence, wherein, the first electrode layer comprises the conductive film provided by the present application, or both the first electrode layer and the second electrode layer comprise the conductive film provided by the present application. Or alternatively, the electrochromic film comprises: a first substrate layer, a first electrode layer, an ion storage layer, an electrolyte layer, a second electrode layer and a second substrate layer which are stacked in sequence, wherein, the second electrode layer comprises the conductive film provided by the present application, or the first electrode layer and the second electrode layer both comprise the conductive film provided by the present application. Or alternatively, the electrochromic film comprises: a first substrate layer, a first electrode layer, an ion storage layer, an electrolyte layer, an electrochromic layer, a second electrode layer, and a second substrate layer stacked in sequence, wherein, at least one of the first electrode layer, the second electrode layer, the ion storage layer, and the electrochromic layer comprises the conductive film provided by the present application.

In a sixth aspect, the present application provides an electrochromic device, comprising at least one supporting substrate and the electrochromic film provided in the present application. The at least one supporting substrate and the electrochromic film are stacked.

In a seventh aspect, the present application provides a terminal product, comprising the electrochromic film provided by the present application or the electrochromic device provided by the present application. The terminal product comprises the terminal product comprises any one of a rearview mirror, a curtain wall, a car sunroof, a car side window, a car windshield, a housing of an electronic product, glasses, a vehicle, and a display panel.

Compared with the existing technology, beneficial effects of the present application are summarized as follows:

The conductive ink provided in the first aspect of the present application comprises the organic conductive material and the solvent. Since the solvent has a boiling point lower than or equal to 150°C, i.e., the boiling point of the solvent contained in the conductive ink is lowered, its corresponding saturated vapor pressure is increased. Therefore, when the conductive ink of the present application is used to prepare a conductive film, the solvent evaporates rapidly and dries easily, thereby improving production efficiency. In addition, since the boiling point of the solvent is low, the volatilization of the solvent is also easier and more complete, so that the conductive film formed from the conductive ink has the advantages of uniformity, flatness, and density. Moreover, since the conductive ink contains an organic conductive material, such as an n-type conductive polymer, which has a high conductive property, the conductive film prepared from the conductive ink also exhibits excellent conductivity, which can increase the electrical conduction rate of the conductive film.

The preparation method of a conductive ink provided by the second aspect of the present application prepares the conductive ink by mixing an organic conductive material and a solvent. Since the solvent has a boiling point of lower than or equal to 150°C, the prepared conductive ink is easy to dry when used to prepare a conductive film, resulting in high production efficiency. In addition, the formed conductive film possesses the advantages of being uniform, flat, and dense. Moreover, since the conductive ink contains an organic conductive material, such as an n-type conductive polymer, which exhibits high conductivity, the conductive film prepared from the conductive ink prepared by the preparation method has excellent conductivity, and the electrical conduction rate of the conductive film can be increased. In addition, the preparation method is simple and easy to operate, has low requirements on operating conditions, is low in cost, and is suitable for mass production.

The conductive film provided in the third aspect of the present application is formed from the conductive ink provided by the present application or from the conductive ink prepared by the preparation method provided by the present application. Since the solvent in the conductive ink has a boiling point lower than or equal to 150°C, i.e., the boiling point of the solvent contained in the conductive ink is lowered, its corresponding saturated vapor pressure is increased. Therefore, when the conductive ink of the present application is used to prepare a conductive film, the solvent evaporates rapidly and dries easily, thereby improving production efficiency. In addition, since the boiling point of the solvent is low, the volatilization of the solvent is also easier and more complete, so that the conductive film formed from the conductive ink has the advantages of uniformity, flatness, and density. Moreover, since the conductive ink contains an organic conductive material, such as an n-type conductive polymer, which has a high conductive property, the conductive film prepared from the conductive ink also has excellent conductivity, which can increase the electrical conduction rate of the conductive film.

In the conductive substrate provided in the fourth aspect of the present application, since the electrode layer arranged on the substrate layer comprises the conductive film provided in the present application, the electrode layer on the conductive substrate has the advantages of uniformity, flatness, density, and excellent electrical conduction rate, so that the quality of the formed conductive substrate is more excellent and the formed conductive substrate is more suitable for preparing various devices or products.

The electrochromic film provided in the fifth aspect of the present application comprises a first substrate layer, a first electrode layer, an electrochromic medium layer, a second electrode layer, and a second substrate layer stacked in sequence; or comprises a first substrate layer, a first electrode layer, an electrolyte layer, an electrochromic layer, a second electrode layer, and a second substrate layer stacked in sequence; or comprises a first substrate layer, a first electrode layer, an ion storage layer, an electrolyte layer, a second electrode layer, and a second substrate layer stacked in sequence; or comprises a first substrate layer, a first electrode layer, an ion storage layer, an electrolyte layer, a second electrode layer, and a second substrate layer stacked in sequence; or comprises a first substrate layer, a first electrode layer, an ion storage layer, an electrolyte layer, an electrochromic layer, a second electrode layer, and a second substrate layer stacked in sequence. Since at least one of the first electrode layer, the second electrode layer, the ion storage layer, and the electrochromic layer comprises the conductive film provided in the present application, the conductive film is made from the conductive ink provided in the present application or the conductive ink prepared by the preparation method provided in the present application, and the conductive film has the advantages of uniformity, flatness, density, and excellent electrical conduction rate. When the electrode layer contains the conductive film, the resistance distribution of the electrode layer can be made more uniform and the electrical conduction rate can be made more excellent, and when the ion storage layer or the electrochromic layer contains the conductive film, the ion storage layer or the electrochromic layer can have more uniform and rapid ion or electron transmission characteristics, which makes the electrochromic film of the present application have excellent performances, such as more uniform color change and faster color change efficiency.

The electrochromic device provided in the sixth aspect of the present application comprises at least one supporting substrate and the electrochromic film provided in the present application. The at least one supporting substrate and the electrochromic film are stacked, that is, the electrochromic film is arranged on the supporting substrate, or sandwiched between the supporting substrates, so that the electrochromic film can be better supported, especially when sandwiched between the supporting substrates, the electrochromic film can be better protected by the supporting substrates. Moreover, since the electrochromic film in the electrochromic device comprises the conductive film provided in the present application, the electrochromic device also has excellent performances, such as more uniform and rapid color change.

The terminal product provided in the seventh aspect of the present application comprises the electrochromic film provided in the present application or the electrochromic device provided in the present application, that is, the terminal product comprises the conductive film provided in the present application, so that the terminal product provided in the embodiments of the present application has the advantages of excellent color change performance, etc. When the terminal product is applied to a vehicle (such as a car), an electronic product (such as consumer electronics) or a building, the device can have a more excellent color change performance.

### BRIEF DESCRIPTION OF THE DRAWINGS

In order to more clearly illustrate the technical solutions in the embodiments of the present application, the drawings required for use in the embodiments or prior art descriptions are briefly introduced below. The drawings described below are only some embodiments of the present application. For one skilled in the art, other drawings can be obtained based on these drawings without creative work.
FIG. 1 is a structural schematic diagram of a conductive substrate provided in some embodiments of the present application;
FIG. 2 is a structural schematic diagram of an electrochromic film provided in some embodiments of the present application;
FIG. 3 is a structural schematic diagram of an electrochromic film provided in other embodiments of the present application;
FIG. 4 is a structural schematic diagram of an electrochromic film provided in still other embodiments of the present application;
FIG. 5 is a structural schematic diagram of an electrochromic film provided in other embodiments of the present application;
FIG. 6 is a structural schematic diagram of an electrochromic device provided in some embodiments of the present application;
FIG. 7 is a picture of a conductive film formed by coating a conductive ink provided in Example 1 of the present application on a surface of a PET substrate;
FIG. 8 is a picture of a conductive film formed by coating a conductive ink provided in Example 2 of the present application on a surface of a PET substrate;
FIG. 9 is a picture of a conductive film formed by coating a conductive ink provided in Example 3 of the present application on a surface of a PET substrate;
FIG. 10 is a picture of a conductive film formed by coating a conductive ink provided in Example 4 of the present application on a surface of a PET substrate;
FIG. 11 is a picture of a conductive film formed by coating a conductive ink provided in Example 5 of the present application on a surface of a PET substrate;
FIG. 12 is a picture of a conductive film formed by coating a conductive ink provided in Comparative Example 1 of the present application on a surface of a PET substrate;
FIG. 13 is a picture of a conductive film formed by coating a conductive ink provided in Comparative Example 2 of the present application on a surface of a PET substrate; and
FIG. 14 is a schematic diagram of a cyclic voltammetry curve of a conductive film prepared in Example 1 of the present application.

The following reference numerals are adopted:
1-electrochromic device; 2- supporting substrate; 21-first supporting substrate; 22-second supporting substrate; 3-electrochromic film; 31-conductive substrate; 311-substrate layer; 3111-first substrate layer; 3112-second substrate layer; 312-electrode layer; 3121-first electrode layer; 3122-second electrode layer; 32-electrochromic medium layer; 321-ion storage layer; 322-electrolyte layer; and 323-electrochromic layer.

### DETAILED DESCRIPTION OF THE EMBODIMENTS

In order to clarify the technical problems solved by the present application, technical solutions, and beneficial effects, the present application is further described in detail in combination with the embodiments below. It should be understood that the specific embodiments described here are only used to explain the present application and are not used to limit the present application.

In the present application, the term "and/or" describes the association relationship of associated objects, indicating that there may be three relationships. For example, A and/or B can mean: A exists alone, A and B exist at the same time, and B exists alone. A and B can be singular or plural. The character "/" generally indicates that the associated objects therebefore and thereafter are in an "or" relationship.

In the present application, "at least one" means one or more, and "many" means two or more. "At least one selected from..." or similar expressions refer to any combination of these items, comprising any combination of a single or plural. For example, "at least one selected from a, b or c", or "at least one selected from a, b and c", can all mean: a, b, c, a-b (i.e. a and b), a-c, b-c, or a-b-c, where a, b, c can be singular or plural.

It should be understood that in various embodiments of the present application, the serial number of each process does not mean the order of execution. Some or all steps can be executed in parallel or in sequence. The execution order of each process should be determined by its function and internal logic, and should not constitute any limitation on the implementation process of the embodiments of the present application.

The terms used in the embodiments of the present application are only for the purpose of describing specific embodiments, and are not intended to limit the present application. The singular forms of "a", "said" and "the" used in the embodiments of the present application and the appended claims are also intended to comprise plural forms unless the context clearly indicates other meanings.

The weight of the relevant components mentioned in the embodiment description of the present application can not only refer to the specific content of each component, but also indicate the proportional relationship between the weights of the components. Therefore, as long as the content of the relevant components is proportionally enlarged or reduced according to the embodiment description of the present application, it is within the scope disclosed in the embodiment description of the present application. Specifically, the mass described in the embodiment description of the present application can be a mass unit known in the chemical industry such as µg, mg, g, kg, etc.

The terms "first", "second" are only used for describing purposes, for purposes of distinguishing materials from each other, and cannot be interpreted as indicating or suggesting relative importance or implicitly indicating the quantity of indicated technical features. For example, without departing from the scope of the present application, the first XX may also be referred to as the second XX, and similarly, the second XX may also be referred to as the first XX. Thus, the feature defined as "first", "second" may comprise one or more of these features, either explicitly or implicitly.

Some embodiments of the present application provide a conductive ink, which, comprises the following components in weight percentage, based on a total weight of the conductive ink being 100%: 1% to 85% of an organic conductive material, and 15% to 99% of a solvent. The solvent is a solvent with a boiling point of lower than or equal to 150°C.

The conductive ink provided in the embodiments of the present application comprises an organic conductive material and a solvent. Since the solvent is a solvent with a boiling point of lower than or equal to 150°C, i.e., the boiling point of the solvent contained in the conductive ink is lowered, its corresponding saturated vapor pressure is increased. Therefore, when the conductive ink of embodiments of the present application is used to prepare a conductive film, the solvent evaporates faster and dries easily, thereby improving production efficiency. In addition, since the boiling point of the solvent is low, the volatilization of the solvent is also easier and more complete, so that the conductive film formed from the conductive ink has the advantages of uniformity, flatness, and density. Moreover, since the conductive ink contains an organic conductive material, such as an n-type conductive polymer, which has a high conductive property, the conductive film prepared by the conductive ink also has excellent conductivity, which can increase the electrical conduction rate of the conductive film.

The conductive ink comprises an organic conductive material having a weight percentage of 1% to 85%. In some embodiments, the weight percentage of the organic conductive material may be 5% to 80%. In other embodiments, the weight percentage of the organic conductive material may also be 1% to 75% or 1% to 60%. Exemplarily, the weight percentage of the organic conductive material may be 1%, 5%, 10%, 15%, 20%, 25%, 30%, 35%, 40%, 45%, 50%, 55%, 60%, 65%, 70%, 75%, 80%, or 85%, etc.

In some embodiments, the organic conductive material may comprise a transparent organic conductive material. Thus, the conductive film made from the conductive ink containing the transparent organic conductive material may not only have conductive properties, but also have high optical transparency, thereby improving the applicability of the conductive ink.

In some embodiments, the organic conductive material may comprise an n-type conductive polymer. In other embodiments, the organic conductive material may comprise a transparent n-type conductive polymer, such as poly(benzodifurandione) (PBFDO). For example, the n-type conductive polymer may be selected from an n-type conductive polymer having a structural formula represented by Formula I below:

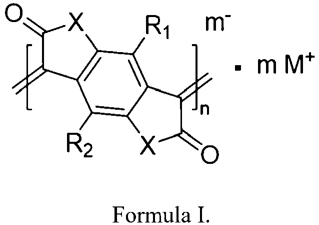

X is oxygen (O), sulfur (S), or selenium (Se); m and n are both integers greater than 0; R₁ and R₂ are independently selected from at least one of H and C₁-C₁₀ alkyl, and M⁺ is a cation. In some embodiments, the C₁-C₁₀ alkyl may be an alkyl group containing 1 to 10 carbon atoms, such as methyl CH₃-, ethyl CH₃CH₂-, propyl CH₃CH₂CH₂-, etc. In other embodiments, the C₁-C₁₀ alkyl group may comprise a straight chain alkyl group or a branched chain alkyl group, such as n-butyl CH₃CH₂CH₂CH₂-, isobutyl (CH₃)₂CHCH₂-, sec-butyl CH₃CH₂(CH₃)CH-, tert-butyl (CH₃)₃C-, etc. In some other embodiments, in the above formula I, X may be O, R₁ and R₂ may both be H, and M⁺ may be a proton, such as H⁺.

The n-type conductive polymer, such as the n-type conductive polymer or PBFDO shown in formula I, etc., has a strong interaction between the main chain of the polymer and the good solvent (such as water, isopropanol, ethanol, etc.) of the embodiments of the present application, so that the n-type conductive polymer still has good solubility and solution processability without alkyl side chains or surfactants. In addition, when the conductive ink having the n-type conductive polymer is used to prepare the conductive film, the prepared conductive film can also have the advantages of high conductivity and excellent stability, and even high optical transparency, etc., thereby improving the applicability of the conductive ink.

In some embodiments, the conductive ink comprises a solvent having a weight percentage of 15% to 99%, and a boiling point lower than or equal to 150°C. Exemplarily, the weight percentage of the solvent maybe 15%, 20%, 25%, 30%, 35%, 40%, 45%, 50%, 55%, 60%, 65%, 70%, 75%, 80%, 85%, 90%, 20%, 25%, 30%, 35%, 40%, 45%, 50%, 55%, 60%, 65%, 70%, 75%, 80%, 85%, 90%, 95%, or 99%, etc. Within the weight percentage range, the solvent effectively dissolves the organic conductive material to form a conductive ink, and the conductive ink can be used to form a conductive film with high conductivity and uniformity.

It is found that when the conductive ink is applied to the substrate layer to form a conductive film, the film forming time is crucial to the optimized nucleation, crystal growth, and industrial production efficiency of the organic conductive material (such as n-type conductive polymer). Typically, the initial nucleation of n-type conductive polymers is caused by supersaturation, in which the liquid (solvent) contains more dissolved solids (solutes) than can be accommodated at a specific temperature, and this supersaturation is mainly due to solvent evaporation. Therefore, the vapor pressure or the boiling point of the solvent in the conductive ink is crucial to controlling the crystallization rate of the organic conductive material or the film-forming time of the conductive ink.

In some embodiments, the solvent of the conductive ink may be a solvent with a boiling point of lower than or equal to 150°C. In other embodiments, the solvent of the conductive ink may be a solvent with a boiling point of lower than or equal to 120°C. In yet other embodiments, the solvent of the conductive ink may be a solvent with a boiling point of lower than or equal to 100°C. Thus, by using a solvent having a lower boiling point to dissolve the organic conductive material, the solvent can evaporate (volatize) faster during the film-forming process of the conductive ink, so that the conductive ink can be in a supersaturated state, thereby facilitating the crystallization nucleation process of the organic conductive material, significantly shortening the film-forming time of the conductive ink to improve the film-forming efficiency thereof, and improving the efficiency of industrial production.

Further, since DMSO contains a hydrophilic sulfinyl group and two hydrophobic methyl groups in its structure, DMSO can be miscible with water or most organic solvents except petroleum ether, and can dissolve about 80% of compounds, such as most water-soluble compounds and fat-soluble compounds. Therefore, DMSO is generally considered to be a universal solvent. In the existing technology, when organic materials need to be dissolved, DMSO or DMF with similar properties, or a mixture of DMSO and DMF is usually selected. However, DMSO and DMF not only have the characteristics of high boiling point, but also have the characteristics of strong polarity and high surface tension. When a solution containing DMSO and/or DMF (such as conductive ink) is coated on a substrate to form a film, the substrate is usually required to have a strong surface energy, so that the substrate needs to be subjected to an additional high-intensity hydrophilic treatment in advance, and the process is relatively complicated. In addition, when the surface energy of the substrate is less than the surface tension of the solvent, the conductive ink is easy to quickly gather on the substrate or roll back from the edge of the substrate, which easily leads to poor uniformity of the film formed on the substrate, resulting in poor quality of the formed conductive film.

In some embodiments, the solvent of the conductive ink may be a hydrophilic solvent. In other embodiments, the solvent of the conductive ink may be a hydrophilic solvent with a boiling point of lower than or equal to 150°C. In yet other embodiments, the solvent of the conductive ink may be a hydrophilic solvent with a boiling point of lower than or equal to 120°C. In yet other embodiments, the solvent of the conductive ink may be a hydrophilic solvent with a boiling point of lower than or equal to 100°C. In this situation, since the solvent is a hydrophilic solvent, when the conductive ink is applied to the substrate layer, there is no need to perform an additional hydrophilic process on the substrate layer in advance, and a conductive film with high conductivity and uniform flatness can be formed on the substrate layer. The conductive film has good quality, and has the advantages of simple process and low cost.

In some embodiments, the solvent may comprise a good solvent. In other embodiments, the good solvent may be selected from at least one of water, isopropanol, and ethanol. For example, the good solvent may be one of water, isopropanol, and ethanol, or may be a mixture of any two of water, isopropanol, and ethanol, or may be a mixture of three of water, isopropanol, and ethanol. Generally, good solvents such as water, isopropyl alcohol, and ethanol can have strong interactions with the polymer backbone of organic conductive materials (such as n-type conductive polymers), and the polarities match each other. Therefore, the organic conductive materials (such as n-type conductive polymers) can be better dissolved in these good solvents, thereby improving the uniformity of the formed conductive ink.

In some embodiments, when the good solvent comprises water, the weight percentage of the organic conductive material may be 5% to 80%, and it can be understood that the weight percentage of water is 20% to 95%. In other embodiments, when the good solvent comprises isopropanol or ethanol, the weight percentage of the organic conductive material may be 1% to 60%, and it can be understood that the weight percentage of isopropanol or ethanol is 40% to 99%. In some other embodiments, when the good solvent comprises at least two of water, isopropanol, and ethanol, the weight percentage of the organic conductive material may be 1% to 75%, and it can be understood that the total weight percentage of the at least two of water, isopropanol, and ethanol is 25% to 99%. Therefore, different good solvents can be selected to dissolve the organic conductive material according to the actual needs to ensure the excellent performance of the conductive ink formed.

In some embodiments, the solvent may comprise a poor solvent. In other embodiments, the poor solvent may be selected from at least one of isobutanol, tert-butanol, methyl ethyl ketone, methyl isobutyl ketone, ethyl acetate, butyl acetate, methyl ethyl ether, and propionaldehyde. For example, the poor solvent may be one of isobutanol, tert-butanol, methyl ethyl ketone, methyl isobutyl ketone, ethyl acetate, butyl acetate, methyl ethyl ether, and propionaldehyde; or may be a mixture of any two or more of isobutanol, tert-butanol, methyl ethyl ketone, methyl isobutyl ketone, ethyl acetate, butyl acetate, methyl ethyl ether, and propionaldehyde. Thus, different poor solvents may be selected according to the actual needs to improve the applicability of the prepared conductive ink.

In some embodiments, the solvent may comprise a good solvent and a poor solvent. As a functional term, the good solvent and the poor solvent may be different for different solute materials. Therefore, the good solvent and the poor solvent in the embodiment of the present application are defined with respect to organic conductive materials. A good solvent refers to a solvent having high solubility for organic conductive materials; and a poor solvent refers to a solvent having low solubility for organic conductive materials.

In some embodiments, when the solvent comprises a good solvent and a poor solvent, for example, a mixed solvent of a good solvent and a poor solvent, the weight percentage of the organic conductive material can be 1% to 40%, and it can be understood that the total weight percentage of the good solvent and the poor solvent can be 60% to 99%.

In some embodiments, the solvent may comprise a good solvent and a poor solvent, and a volume of the good solvent may be greater than a volume of the poor solvent. In other embodiments, the volume of the good solvent can be greater than 50% of the total volume of the solvent, that is, the volume of the good solvent is greater than 50% of the total volume of the good solvent and the poor solvent. In this case, by making the volume of the good solvent greater than the volume of the poor solvent, the dissolution effect of the organic conductive material can be optimized, thereby facilitating the conductive ink to form a uniform, smooth, and dense conductive film.

In some embodiments, the solvent may comprise water, and a volume of water is greater than 70% of a total volume of the solvent. That is, when the solvent comprises water, ensuring that the volume of water is greater than 70% of the total volume of the solvent can optimize the dissolution effect of the organic conductive material, thereby facilitating the conductive ink to form a uniform, flat, and dense conductive film.

The conductive ink of the embodiments of the present application can be prepared by the following preparation method.

Some embodiments of the present application provide a preparation method of a conductive ink, comprising the following steps: S01: providing the components of the conductive ink of the present application; S02: mixing the organic conductive material and the solvent to obtain the conductive ink.

The preparation method of the conductive ink provided in the embodiments of the present application can obtain the conductive ink by mixing the organic conductive material and the solvent. Since the solvent has a boiling point of lower than or equal to 150°C, the prepared conductive ink is easy to dry when used to prepare a conductive film, and the production efficiency is high. In addition, the conductive film formed has the advantages of being uniform, flat, and dense. Moreover, since the conductive ink contains an organic conductive material, such as an n-type conductive polymer, which has a high conductive property, the conductive film prepared from the conductive ink prepared by the preparation method has excellent conductivity, and the electrical conduction rate of the conductive film can be increased. In addition, the preparation method is simple and easy to operate, has low requirements on operating conditions, is low in cost, and is suitable for mass production.

The conductive ink in step S01 is the conductive ink of the embodiments of the present application. Therefore, the specific types and contents of the raw materials of the components of the conductive ink of the embodiments of the present application provided in step S01 are as introduced the conductive ink of the embodiments of the present application, which will not be repeated herein in order to save space.

In some embodiments, in step S02, the solvent may comprise a good solvent, and the step of mixing the organic conductive material and the solvent may comprise: mixing the organic conductive material and the good solvent, and sequentially performing a first ultrasonic treatment and a first stirring treatment.

In other embodiments, in step S02, the solvent may comprise a good solvent and a poor solvent, and the step of mixing the organic conductive material and the solvent may comprise: mixing the organic conductive material and the good solvent, and sequentially performing a first ultrasonic treatment and a first stirring treatment to obtain a mixed solution of the organic conductive material and the good solvent; and adding the poor solvent to the mixed solution, and sequentially performing a second ultrasonic treatment and a second stirring treatment. This is conducive to the full dissolution of the organic conductive material in the solvent, thereby achieving the optimal dispersion effect.

In some embodiments, the power of the first ultrasonic treatment may be 100 W to 200 W, the ultrasonic treatment time may be 0.5 hr to 1 hr, the rotational speed of the first stirring treatment may be 1200 rpm to 1500 rpm, and the stirring time may be 0.5 hr to 4 hrs. In other embodiments, the power of the second ultrasonic treatment may be 100 W to 200W, the ultrasonic time may be 0.5 hr to 1 hr, the rotational speed of the second stirring treatment may be 1200 rpm to 1500 rpm, and the stirring time may be 0.5 hr to 4 hrs.

Some embodiments of the present application provide a conductive film, which is made of the conductive ink provided by the embodiments of the present application or the conductive ink prepared by the preparation method provided by the embodiments of the present application. Since the solvent in the conductive ink has a boiling point lower than or equal to 150°C, i.e., the boiling point of the solvent contained in the conductive ink is lowered, its corresponding saturated vapor pressure is increased. Therefore, when the conductive ink of the present application is used to prepare a conductive film, the solvent evaporates faster and is easy to dry, thereby improving production efficiency. In addition, since the boiling point of the solvent is low, the volatilization of the solvent is also easier and more complete, so that the conductive film formed from the conductive ink has the advantages of uniformity, flatness, and density. Moreover, since the conductive ink contains an organic conductive material, such as an n-type conductive polymer, which has a high conductive property, the conductive film prepared by the conductive ink also has excellent conductivity, which can improve the electrical conduction rate of the conductive film.

In some embodiments, the conductive film can serve as an electrode layer in an electrochromic film. In some other embodiments, the conductive film can also serve as an ion storage layer or an electrochromic layer in an electrochromic film. In some other embodiments, and the conductive films can also simultaneously serve as both an electrode layer and an ion storage layer in an electrochromic film, or as both an electrode layer and an electrochromic layer in an electrochromic film.

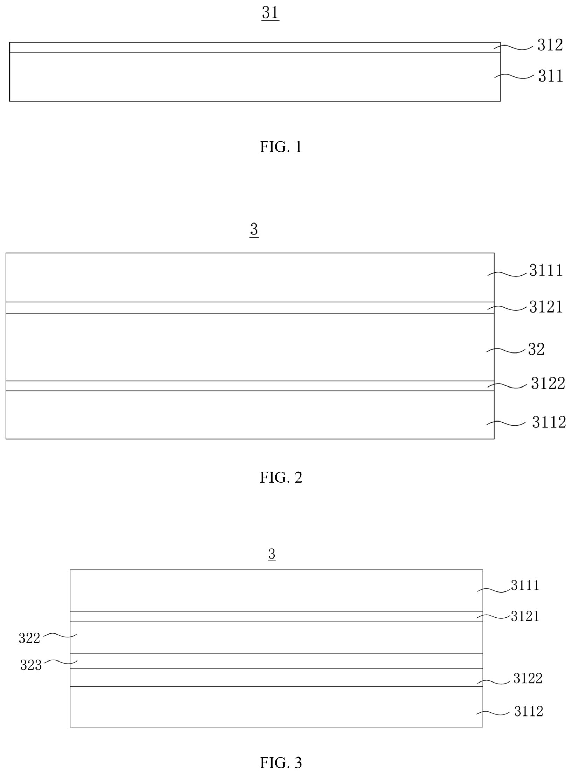

As shown in FIG. 1, some embodiments of the present application provide a conductive substrate 31, comprising: a substrate layer 311, and an electrode layer 312 disposed on the substrate layer 311, and the electrode layer 312 comprises the conductive film provided in the embodiments of the present application.

In some embodiments, the conductive ink provided in the embodiments of the present application or the conductive ink prepared by the preparation method provided in the embodiments of the present application can be coated on the substrate layer by a process such as magnetron sputtering or coating to form an electrode layer comprising the conductive film provided in the embodiments of the present application on the substrate layer, or coated on the electrode layer to form an ion storage layer or an electrochromic layer comprising the conductive film provided in the embodiments of the present application. Taking the coating method as an example, the substrate layer or the substrate layer comprising the electrode layer can be placed flat on a scraping table, and a clean wire rod can be placed on the machine, the lock can be clamped, and then a pipette can be used to absorb an appropriate amount of conductive ink, and the liquid can be discharged parallel to the wire rod at 1cm to 2 cm off the offline rod, and then the equipment can be started to automatically coat according to the set parameters. After air-drying at room temperature, the film material formed can be placed in an oven for drying, and the conductive film can be formed on the substrate layer or the electrode layer.

In some embodiments, the substrate layer 311 may comprise a flexible substrate, such as a polyethylene terephthalate (PET) base, a flexible glass substrate, a polyimide (PI) substrate, and a polydimethylsiloxane (PDMS) substrate. In other embodiments, the substrate layer 311 may comprise a rigid substrate, such as a rigid glass substrate. Thus, according to the actual needs, the conductive ink may be coated on a flexible substrate or a rigid substrate to form a conductive film, thereby forming a flexible conductive substrate or a rigid conductive substrate to adapt to different application scenarios.

The conductive substrate provided in the embodiments of the present application, since the electrode layer disposed on the substrate layer comprises the conductive film provided by the present application, and the conductive film is made from the conductive ink provided by the present application or the conductive ink prepared by the preparation method provided by the present application, the electrode layer on the conductive substrate has the advantages of uniformity, flatness, density, and excellent electrical conduction rate, so that the quality of the formed conductive substrate is more excellent and more suitable for preparing various devices or products.

Some embodiments of the present application provide an electrochromic film 3. As shown in FIG. 2, the electrochromic film 3 may comprise a first substrate layer 3111, a first electrode layer 3121, an electrochromic medium layer 32, a second electrode layer 3122, and a second substrate layer 3112 stacked in sequence. At least one of the first electrode layer 3121 and the second electrode layer 3122 comprises a conductive film provided in embodiments of the present application.

The electrochromic medium layer 32 may be in a liquid state, a sol state, or a solid state. In some embodiments, the electrochromic medium layer 32 may comprise liquid crystal (LC), polymer dispersed liquid crystal (PDLC), suspended-particle devices (SPD), micro-blinds, inorganic electrochromic materials, and organic electrochromic materials. Thus, by applying voltage to the first electrode layer and the second electrode layer, a potential difference is formed at two ends of the electrochromic medium layer, driving the ions or electrons between the two ends of the electrochromic medium layer to intercalate or deintercalate, so that the electrochromic film shows a change in color or transmittance as a whole, so as to transform between the colored state (such as blue, black, or other colors) and the faded state (such as transparent), or between the colored state, the intermediate state (any color state between the colored state and the faded state, such as light blue or light black, etc.) and the faded state, etc.

In some embodiments, the first electrode layer 3121 or the second electrode layer 3122 may comprise the conductive film provided in the embodiments of the present application, that is, the first electrode layer 3121 may be made from the conductive ink provided in the present application or the conductive ink prepared by the preparation method provided in the present application, and accordingly, the second electrode layer 3122 may be made from other materials, such as indium tin oxide (ITO), etc.; or alternatively, the second electrode layer 3122 may be made from the conductive ink provided in the present application or the conductive ink prepared by the preparation method provided in the present application, and accordingly, the first electrode layer 3121 may be made from other materials, such as indium tin oxide (ITO), etc. In other embodiments, the first electrode layer 3121 and the second electrode layer 3122 may comprise the conductive film provided in the embodiments of the present application, that is, the first electrode layer 3121 or the second electrode layer 3122 may be made from the conductive ink provided in the present application or the conductive ink prepared by the preparation method provided in the present application.

The electrochromic film provided in the embodiments of the present application comprises a first substrate layer, a first electrode layer, an electrochromic medium layer, a second electrode layer, and a second substrate layer, which are stacked in sequence. Since at least one of the first electrode layer and the second electrode layer comprises the conductive film provided in the embodiments of the present application, the conductive film has the advantages of being uniform, flat, compact and having an excellent electrical conduction rate, so that the resistance distribution of the electrode layer of the electrochromic film is more uniform and the electrical conduction rate is more excellent, which makes the electrochromic film of the present application have excellent performances, such as more uniform color change and faster color change efficiency.

Some embodiments of the present application provide an electrochromic film. As shown in FIG. 3, the electrochromic film 3 may comprise a first substrate layer 3111, a first electrode layer 3121, an electrolyte layer 322, an electrochromic layer 323, a second electrode layer 3122, and a second substrate layer 3112 which are stacked in sequence. The first electrode layer 3121 comprises the conductive film provided in the embodiments of the present application, or the first electrode layer 3121 and the second electrode layer 3122 both comprise the conductive films provided in the embodiments of the present application.

In some embodiments, the first electrode layer 3121 may comprise the conductive film provided in the embodiments of the present application, that is, the first electrode layer 3121 may be made from the conductive ink provided in the present application or the conductive ink prepared by the preparation method provided in the present application, and accordingly, the second electrode layer 3122 may be made from other materials, such as indium tin oxide (ITO), etc. The second electrode layer 3122 may also be made from the conductive ink provided in the present application or the conductive ink prepared by the preparation method provided in the present application. At this time, the first electrode layer 3121 can not only serve as the conductive layer of the electrochromic film, but also serve as the ion storage layer in the electrochromic film, thereby having both high conductivity and excellent ion storage or ion transport properties.

The electrochromic film provided in some embodiments of the present application comprises a first substrate layer, a first electrode layer, an electrolyte layer, an electrochromic layer, a second electrode layer, and a second substrate layer which are stacked in sequence. At least the first electrode layer comprises the conductive film provided in the present application, the first electrode layer and/or the second electrode layer can serve as the conductive layer of the electrochromic film, because the electrode layer has the advantages of uniformity, flatness, compactness, and excellent electrical conduction rate, so that the resistance distribution of the conductive layer of the electrochromic film is more uniform, the electrical conduction rate is more excellent, and the electrochromic film of the present application has excellent performances such as more uniform color change and faster color change efficiency. In addition, the first electrode layer can also serve as the ion storage layer of the electrochromic film, because the electrode layer has the advantages of uniformity, flatness, compactness, and excellent electrical conduction rate, so that the ion storage layer of the electrochromic film has more uniform and faster ion transmission characteristics, so that the electrochromic film of the present application has excellent performances such as more uniform and faster color change.

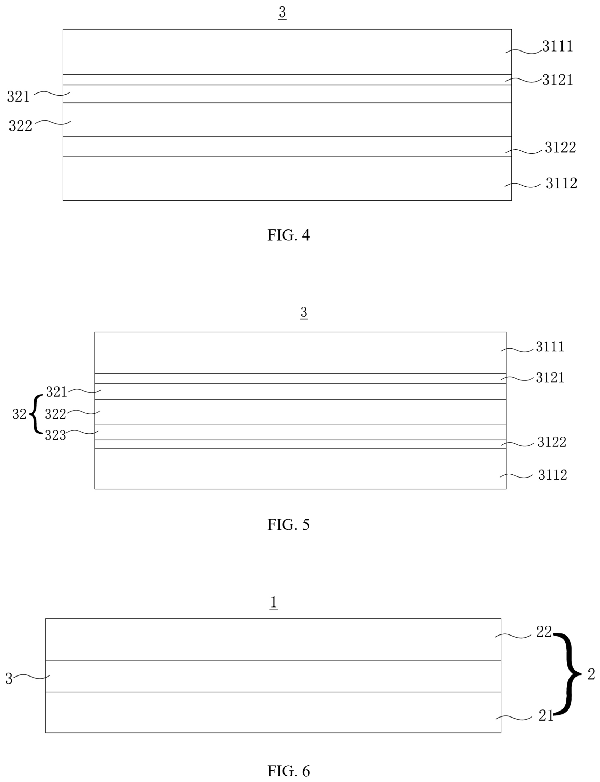

Some embodiments of the present application provide an electrochromic film. As shown in FIG. 4, the electrochromic film 3 may comprise a first substrate layer 3111, a first electrode layer 3121, an ion storage layer 321, an electrolyte layer 322, a second electrode layer 3122, and a second substrate layer 3112 which are stacked in sequence. The second electrode layer 3122 comprises the conductive film provided in the embodiments of the present application, or the first electrode layer 3121 and the second electrode layer 3122 both comprise the conductive film provided in the embodiments of the present application.

In some embodiments, the second electrode layer 3122 may be made from the conductive ink provided in the present application or the conductive ink prepared by the preparation method provided in the present application. Accordingly, the first electrode layer 3121 may be made from other materials, such as indium tin oxide (ITO), etc. The first electrode layer 3121 may also be made from the conductive ink provided in the present application or the conductive ink prepared by the preparation method provided in the present application. In such condition, the second electrode layer 3122 can not only serve as the conductive layer of the electrochromic film, but also serve as the electrochromic layer in the electrochromic film, thereby having both high conductivity and excellent color changing properties.

The electrochromic film provided in some embodiments of the present application comprises a first substrate layer, a first electrode layer, an ion storage layer, an electrolyte layer, a second electrode layer, and a second substrate layer stacked in sequence. At least the second electrode layer comprises the conductive film provided in the present application. The first electrode layer and/or the second electrode layer can serve as the conductive layer of the electrochromic film. Because the electrode layer has the advantages of uniformity, flatness, compactness, and excellent electrical conduction rate, so that the resistance distribution of the conductive layer of the electrochromic film is more uniform, the electrical conduction rate is more excellent, and the electrochromic film of the present application has excellent performances, such as more uniform color change and faster color change efficiency. On the other hand, the second electrode layer can also serve as the electrochromic layer of the electrochromic film. Because the electrode layer has the advantages of uniformity, flatness, compactness, and excellent electrical conduction rate, the electrochromic layer of the electrochromic film has more uniform and rapid color change characteristics, so that the electrochromic film of the present application has excellent performances, such as more uniform and rapid color change.

Some embodiments of the present application provide an electrochromic film. As shown in FIG. 5, the electrochromic film 3 may comprise a first substrate layer 3111, a first electrode layer 3121, an ion storage layer 321, an electrolyte layer 322, an electrochromic layer 323, a second electrode layer 3122, and a second substrate layer 3112 that are stacked in sequence. At least one of the first electrode layer 3121, the ion storage layer 321, the electrochromic layer 323, and the second electrode layer 3122 comprises a conductive film provided in an embodiment of the present application. In some embodiments, as shown in FIG. 5, the sequentially stacked ion storage layer 321, the electrolyte layer 322, and the electrochromic layer 323 may form the electrochromic medium layer 32 as described above.

In some embodiments, the first electrode layer 3121 or the second electrode layer 3122 may comprise the conductive film provided in the embodiments of the present application, that is, the first electrode layer 3121 may be made from the conductive ink provided in the present application or the conductive ink prepared by the preparation method provided in the present application, and accordingly, the second electrode layer 3122 may be made from other materials, such as indium tin oxide (ITO), etc. Or alternatively, the second electrode layer 3122 may be made from the conductive ink provided in the present application or the conductive ink prepared by the preparation method provided in the present application, and accordingly, the first electrode layer 3121 may be made from other materials, such as indium tin oxide (ITO), etc. In other embodiments, the first electrode layer 3121 and the second electrode layer 3122 may comprise the conductive films provided in the embodiments of the present application, that is, the first electrode layer 3121 or the second electrode layer 3122 may be made from the conductive ink provided in the present application or the conductive ink prepared by the preparation method provided in the present application.

In some embodiments, the ion storage layer 321 may comprise the conductive film provided in the embodiments of the present application, that is, the ion storage layer 321 may be made from the conductive ink provided in the present application or the conductive ink prepared by the preparation method provided in the present application, and accordingly, the electrochromic layer 323 may be made from other materials, such as inorganic electrochromic materials or organic electrochromic materials. In other embodiments, the electrochromic layer 323 may comprise the conductive film provided in the embodiments of the present application, that is, the electrochromic layer 323 may be made from the conductive ink provided in the present application or the conductive ink prepared by the preparation method provided in the present application, and accordingly, the ion storage layer 321 may be made from other materials, such as forming an inorganic ion storage layer material or an organic ion storage layer. In other embodiments, the ion storage layer 321 and the electrochromic layer 323 may simultaneously comprise the conductive films provided in the embodiments of the present application, that is, the ion storage layer 321 and the electrochromic layer 323 may both be made from the conductive ink provided in the present application or the conductive ink prepared by the preparation method provided in the present application.

In some embodiments, when the first electrode layer 3121 and the ion storage layer 321 both comprise the conductive films provided in the embodiments of the present application, the first electrode layer 3121 and the ion storage layer 321 can be combined into one layer and made from the conductive ink provided in the present application or the conductive ink prepared by the preparation method provided in the present application. In other embodiments, when the second electrode layer 3122 and the electrochromic layer 323 both comprise the conductive films provided in the embodiments of the present application, the second electrode layer 3122 and the electrochromic layer 323 can be combined into one layer and made from the conductive ink provided in the present application or the conductive ink prepared by the preparation method provided in the present application.

The electrochromic film provided in some embodiments of the present application comprises a first substrate layer, a first electrode layer, an ion storage layer, an electrolyte layer, an electrochromic layer, a second electrode layer, and a second substrate layer, which are stacked in sequence. Since at least one of the first electrode layer, the ion storage layer, the electrochromic layer, and the second electrode layer comprises the conductive film provided in the present application, the conductive film can serve as the conductive layer of the electrochromic film on the one hand. Since the conductive film has the advantages of uniformity, flatness, density, and excellent electrical conduction rate, the resistance distribution of the conductive layer of the electrochromic film is more uniform and the electrical conduction rate is more excellent, which makes the electrochromic film of the present application have excellent properties such as more uniform color change and faster color change efficiency. On the other hand, the conductive film can also serve as the ion storage layer or electrochromic layer of the electrochromic film. Because the conductive film has the advantages of uniformity, flatness, density, and excellent electrical conduction rate, the ion storage layer or electrochromic layer of the electrochromic film has more uniform and rapid color change characteristics, which makes the electrochromic film of the present application have excellent properties such as more uniform and rapid color change.

Some embodiments of the present application provide an electrochromic device, which may comprise at least one supporting substrate and the electrochromic film provided by the embodiments of the present application, and the at least one supporting substrate and the electrochromic film are stacked. The number of supporting substrates is not limited, for example, the number of supporting substrates may be one, two, or more than two. In some embodiments, one supporting substrate is provided, and the electrochromic film can be arranged on the supporting substrate. In some other embodiments, as shown in FIG. 6, two supporting substrates 2 may be provided, for example, a first supporting substrate 21 and a second supporting substrate 22. The first supporting substrate 21, the electrochromic film 3, and the second supporting substrate 22 are stacked in sequence, that is, the electrochromic film 3 is sandwiched between the first supporting substrate 21 and the second supporting substrate 22. In some other embodiments, three supporting substrates may be provided, for example, after forming the sandwich structure shown in FIG. 6, another supporting substrate may be further provided on a side of the first supporting substrate 21 or the second supporting substrate 22 away from the electrochromic film 3.

The electrochromic device provided in the embodiments of the present application comprises at least one supporting substrate and the electrochromic film provided in the embodiments of the present application. The at least one supporting substrate and the electrochromic film are stacked, that is, the electrochromic film is arranged on the supporting substrate, or sandwiched between two supporting substrates, so that the electrochromic film can be better supported, especially when sandwiched between two supporting substrates, the electrochromic film can be better protected by the supporting substrates; and, since the electrochromic film comprises the conductive film provided in the present application, the electrochromic device also has excellent performances such as more uniform and rapid color change.

The embodiments of the present application also provide a terminal product, comprising the electrochromic film provided in the embodiments of the present application or the electrochromic device provided in the embodiments of the present application. The terminal product may comprise any one of a rearview mirror, a curtain wall, a car sunroof, a car side window, a car windshield, a housing of an electronic product, glasses, a vehicle, and a display panel. In some embodiments, the electrochromic film or the electrochromic device can replace the glass or housing of the terminal product. In other embodiments, the electrochromic film or electrochromic device can be affixed to the glass or housing of the terminal product. In other embodiments, the electrochromic film or electrochromic device can also be sandwiched between the glass or housing of the terminal product. Thus, a terminal product with electrochromic characteristics can be formed to enrich the performance of the terminal product.

The terminal product provided in the embodiments of the present application comprises the electrochromic film provided in the embodiments of the present application or the electrochromic device provided in the embodiments of the present application, so that the terminal product provided in the embodiments of the present application has the advantages of excellent color change performance, etc. When the terminal product is applied to a vehicle (such as a car), an electronic product (such as consumer electronics) or a building, the device can have a more excellent color change performance.

The following is explained in conjunction with specific embodiments.

### Example 1

This example provides a conductive ink, a preparation method thereof, and a conductive film prepared from the conductive ink.

A conductive ink comprises the following components in percentage by weight:

| | |
|---|---|
| poly(benzodifurandione) (PBFDO) | 80%, and |
| water | 20%; |

the boiling point of water is 100°C.

A conductive ink was prepared by a preparation method with the following steps:
In step S11, 8.0 g of poly(benzodifurandione) and 2.0 mL of water were collected according to the components and contents of the conductive ink of Example 1; and
In step S12, poly(benzodifurandione) was dissolved in water, ultrasonically treated for 0.5 hr at a power of 100 W and a temperature of 40°C, and then stirred at room temperature for 0.5 hr at a rotational speed of 1300 rpm to obtain a conductive ink.

The conductive ink or the conductive ink prepared by the preparation method of the conductive ink was prepared into a conductive film:
The conductive ink was coated on a 0.4 m × 0.4 m (with a width of 0.4 m and a length of 0.4 m) PET substrate, and dried at 100°C for 2 mins to obtain a conductive film.

### Example 2

This example provides a conductive ink, a preparation method thereof, and a conductive film prepared from the conductive ink.

A conductive ink comprises the following components in percentage by weight:

| | |
|---|---|
| poly(benzodifurandione) (PBFDO) | 60%, and |
| water | 40%; |

the boiling point of water is 78.3°C.

A conductive ink was prepared by a preparation method with the following steps:
In step S11, 6.0 g of poly(benzodifurandione) and 5.1 mL of ethanol were collected according to the components and contents of the conductive ink of Example 2; and
In step S12, poly(benzodifurandione) was dissolved in ethanol, ultrasonically treated for 0.5 hr at a power of 100 W and a temperature of 40°C, and then stirred at room temperature for 1 hr at a rotational speed of 1300 rpm to obtain a conductive ink.

The conductive ink or the conductive ink obtained by the preparation method of the conductive ink was prepared into a conductive film:
The conductive ink was coated on a PET substrate of 0.4 m×0.4 m (with a width of 0.4 m and a length of 0.4 m), and dried at room temperature and pressure for 30 s to obtain a conductive film.

### Example 3

This example provides a conductive ink, a preparation method thereof, and a conductive film prepared from the conductive ink.

A conductive ink comprises the following components in percentage by weight:

| | |
|---|---|
| poly(benzodifurandione) (PBFDO) | 75%, and |
| solvent | 25%; |

the solvent is selected from water and ethanol, and the volume ratio of water to ethanol is 10:1, and the boiling points of water and ethanol are 100°C and 78.3°C, respectively.

A conductive ink was prepared by a preparation method with the following steps:
In step S11, 7.5 g of poly(benzodifurandione), 2.3 mL of water, and 0.3 mL of ethanol were collected according to the components and contents of the conductive ink of Example 3; and
In step S12, poly(benzodifurandione) was added to a mixed solvent of water and ethanol, and ultrasonically treated for 0.5 hr at a power of 100 W and a temperature of 40°C, and then stirred at room temperature for 1 hr at a rotational speed of 1300 rpm to obtain a conductive ink.

The conductive ink or the conductive ink obtained by the preparation method of the conductive ink was prepared into a conductive film:
The conductive ink was coated on a PET substrate of 0.4 m × 0.4 m (with a width of 0.4 m and a length of 0.4 m), and dried at 100°C for 2 min to obtain a conductive film.

### Example 4

This example provides a conductive ink, a preparation method thereof, and a conductive film prepared from the conductive ink.

A conductive ink comprises the following components in percentage by weight:

| | |
|---|---|
| poly(benzodifurandione) (PBFDO) | 40%, and |
| solvent | 60%; |

the solvent is selected from water and ethyl acetate, and the volume ratio of water to ethyl acetate is 16:1, and the boiling points of water and ethyl acetate are 100°C and 77.2°C, respectively.

A conductive ink was prepared by a preparation method with the following steps:
In step S11, 4.0 g of poly(benzodifurandione), 5.7 mL of water, and 0.39 mL of ethyl acetate were collected according to the components and contents of the conductive ink of Example 4; and
In step S12, poly(benzodifurandione) was added to a mixed solvent of water and ethyl acetate, and ultrasonically treated for 0.5 hr at a power of 100 W and a temperature of 40°C, and then stirred at room temperature for 1.5 hr at a rotational speed of 1300 rpm to obtain a conductive ink.

The conductive ink or the conductive ink obtained by the preparation method of the conductive ink was prepared into a conductive film:
The conductive ink was coated on a PET substrate of 0.4 m × 0.4 m (with a width of 0.4 m and a length of 0.4 m), and dried at 100°C for 2 min to obtain a conductive film.

### Example 5

This example provides a conductive ink, a preparation method thereof, and a conductive film prepared from the conductive ink.

A conductive ink comprises the following components in percentage by weight:

| | |
|---|---|
| poly(benzodifurandione) (PBFDO) | 40%, and |
| solvent | 60%; |

the solvent is selected from water and ethyl acetate, and the volume ratio of water to ethyl acetate is 30:1, and the boiling points of water and ethyl acetate are 78.3°C and 77.2°C, respectively.

A conductive ink was prepared by a preparation method with the following steps:
In step S11, 4.0 g of poly(benzodifurandione), 7.4 mL of ethanol, and 0.21 mL of ethyl acetate were collected according to the components and contents of the conductive ink of Example 5; and
In step S12, poly(benzodifurandione) was added to a mixed solvent of ethanol and ethyl acetate, and ultrasonically treated for 0.5 hr at a power of 100 W and a temperature of 40°C, and then stirred at room temperature for 3 hrs at a rotational speed of 1300 rpm to obtain a conductive ink.

The conductive ink or the conductive ink obtained by the preparation method of the conductive ink was prepared into a conductive film:
The conductive ink was coated on a PET substrate of 0.4 m × 0.4 m (with a width of 0.4 m and a length of 0.4 m), and dried at room temperature and pressure for 1 min to obtain a conductive film.

### Comparative Example 1

This comparative example provides a conductive ink, a preparation method thereof, and a conductive film prepared from the conductive ink.

A conductive ink comprises the following components in percentage by weight:

| | |
|---|---|
| poly(benzodifurandione) (PBFDO) | 24%, and |
| dimethylformamide | 76%; |

the boiling point of dimethylformamide is 153°C.

A conductive ink was prepared by a preparation method with the following steps:
In step S11, 2.4 g of poly(benzodifurandione) and 8.0 mL of dimethylformamide were collected according to the components and contents of the conductive ink of Comparative Example 1; and
In step S12, Poly(benzodifurandione) was added to dimethylformamide, and ultrasonically treated for 0.5 hr at a power of 100 W and a temperature of 40°C, and then stirred at room temperature for 3 hrs at a rotational speed of 1300 rpm to obtain a conductive ink.

The conductive ink or the conductive ink obtained by the preparation method of the conductive ink was prepared into a conductive film:
The conductive ink was coated on a PET substrate of 30 mm × 50 mm (with a width of 30 mm and a length of 50 mm), and dried at room temperature and pressure for 12 hrs to obtain a conductive film.

### Comparative Example 2

This comparative example provides a conductive ink, a preparation method thereof, and a conductive film prepared from the conductive ink.

A conductive ink comprises the following components in percentage by weight:

| | |
|---|---|
| poly(benzodifurandione) (PBFDO) | 24%, and |
| dimethyl sulfoxide | 76%; |

the boiling point of dimethyl sulfoxide is 189°C.

A conductive ink was prepared by a preparation method with the following steps:
In step S11, 2.4 g of poly(benzodifurandione) and 6.9 mL of dimethyl sulfoxide were collected according to the components and contents of the conductive ink of Example 5; and
In step S12, poly(benzodifurandione) was added to dimethyl sulfoxide, and ultrasonically treated for 0.5 hr at a power of 100 W and a temperature of 40°C, and then stirred at room temperature for 3 hrs at a rotational speed of 1300 rpm to obtain conductive ink.

The conductive ink or the conductive ink prepared by the preparation method of the conductive ink was prepared into a conductive film:
The conductive ink was coated on a PET substrate of 0.4 m × 0.4 m (with a width of 0.4 m and a length of 0.4 m), and dried at 100°C for 3 hrs to obtain a conductive film.

### Related performance test analysis:

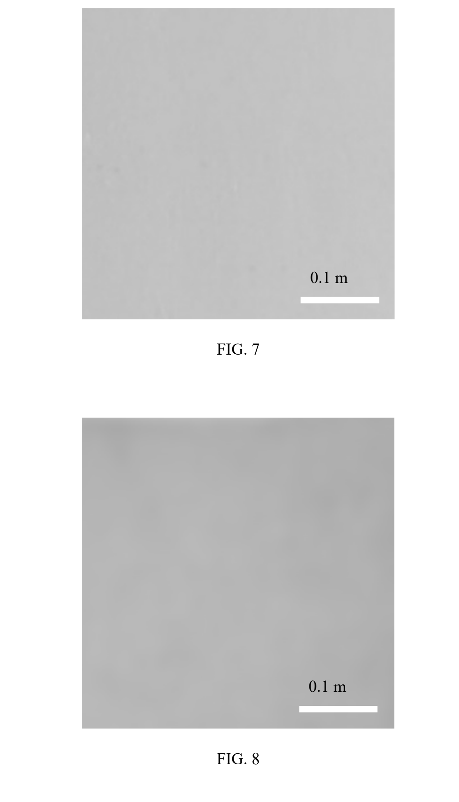

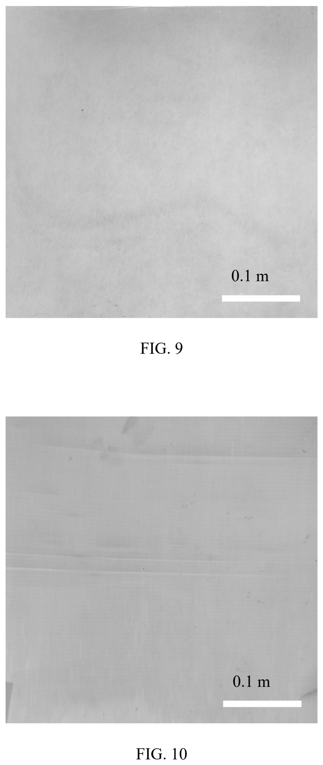

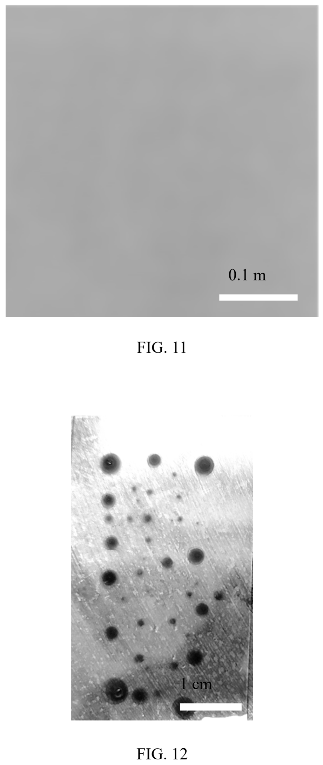

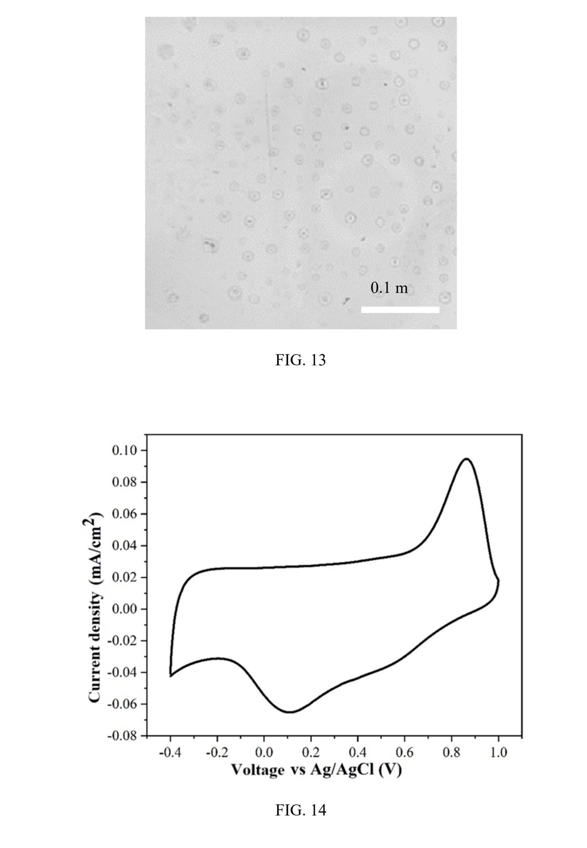

1. The conductive films provided in Examples 1-5 and Comparative Examples 1-2 were sampled, and surface morphologies of these conductive films were photographed by a camera to obtain morphology pictures as shown in FIGS. 7-13. It can be seen from FIGS. 7-11 that the conductive films formed by coating the conductive ink provided in Examples 1-5 on the PET substrates are uniform, flat, and dense, and the film qualities are good. On the contrary, it can be seen from FIGS. 12 and 13 that the conductive films formed by coating the conductive ink provided in Comparative Examples 1-2 on the PET substrates have many dark spots, uneven solute distribution, and many wrinkles, and the film qualities are poor.
2. In addition, it can be seen from the above examples and comparative examples that after the conductive ink provided in Examples 1-5 was coated on the PET substrate, the drying time under room temperature and pressure conditions during the drying process of forming a conductive film is 30 s to 10 mins, and the drying time under 100°C heating conditions was 3 s to 2 mins. However, after the conductive ink provided in comparative examples 1- 2 is coated on the same PET substrate, the drying time under room temperature and pressure conditions during the drying process of forming a conductive film is 12 hrs or more, and the drying time under 100°C heating conditions is 3 hrs or more.
   It can be seen that the conductive ink provided in the examples of the present application uses a solvent with a boiling point of lower than or equal to 150°C, and the solvent is easy to volatilize. Therefore, the conductive ink provided in the examples of the present application is easy to dry after coating and film formation, which reduces the processing time and improves the production efficiency. In addition, due to the low boiling point of the solvent, the volatilization of the solvent is also easier and more complete, so that the film formed by the conductive ink has the advantages of being uniform, flat, and dense.
3. The conductive film prepared in Example 1 was sampled, and a four-probe method was used to detect a square resistance of the conductive film, and the square resistance was measured to be about 52 Ω/cm². Under normal circumstances, ITO conductive films of the same size and thickness have a square resistance of about 40 Ω/cm² to 70 Ω/cm². It can be seen that the conductive film prepared by the conductive ink provided in the examples of the present application has excellent conductive properties comparable to those of ITO conductive films.
4. The conductive film prepared in Example 1 was cut into a 3 cm × 5 cm conductive film, and performed with the electrochemical tests. The conductive film was used as a working electrode, Ag/AgCl was used as a reference electrode, and a Pt plate was used as a counter electrode. The film was placed in a propylene carbonate (PC) solution containing 0.2 mol/L tetrabutyl ammonium bis-trifluoromethane sulfonimidate (TBATFSI). The electrochemical test was performed at a scanning rate of 0.01 V/s between -0.4 V and 1.0 V (vs Ag/AgCl). The cyclic voltammetry curve (CV curve) of the conductive film was shown in FIG. 14. The transmittance of the conductive film was further detected to vary from 20% to 60%.

As can be seen from FIG. 14, different oxidation and reduction reactions are occurred alternately on the working electrode (conductive film) within the monitored voltage range, indicating that the conductive film has a high ion diffusion coefficient and high charge capacitance, proving that the conductive film has a relatively excellent ion storage capacity and can be used as an ion storage layer in an electrochromic device. It can be seen from the transmittance variation range obtained by the test that the conductive film also has the ability to change color (change transmittance) and can be used as an electrochromic layer in an electrochromic device.

The above description is only preferred embodiments of the present application and is not intended to limit the present application. Any modifications, equivalent substitutions, and improvements made within the spirit and principles of the present application shall be comprised in the protection scope of the present application.

## Claims

1. A conductive ink, comprising the following components in weight percentage, based on a total weight of the conductive ink being 100%:
1% to 85% of an organic conductive material, and
15% to 99% of a solvent;
wherein a boiling point of the solvent is lower than or equal to 150°C.

2. The conductive ink according to claim 1, wherein the solvent is a hydrophilic solvent with a boiling point thereof lower than or equal to 150°C.

3. The conductive ink according to claim 1 or 2, wherein the solvent comprises at least one of a good solvent and a poor solvent.

4. The conductive ink according to claim 3, wherein the solvent comprises the good solvent and the poor solvent, wherein a volume of the good solvent is greater than a volume of the poor solvent.

5. The conductive ink according to claim 3, wherein the good solvent is selected from at least one of water, isopropanol, and ethanol; and/or
the poor solvent is selected from at least one of isobutanol, tert-butanol, methyl ethyl ketone, methyl isobutyl ketone, ethyl acetate, butyl acetate, methyl ethyl ether, and propionaldehyde.

6. The conductive ink according to claim 3, wherein the solvent comprises water, and a volume of water is greater than 70% of a total volume of the solvent.

7. The conductive ink according to claim 5, wherein
when the good solvent comprises water, a weight percentage of the organic conductive material is 5% to 80%; or
when the good solvent comprises isopropanol or ethanol, a weight percentage of the organic conductive material is 1% to 60%; or
when the good solvent comprises at least two of water, isopropanol, and ethanol, a weight percentage of the organic conductive material is 1% to 75%; or
when the solvent comprises the good solvent and the poor solvent, a weight percentage of the organic conductive material is 1% to 40%.

8. The conductive ink according to claim 1 or 2, wherein the organic conductive material comprises a transparent organic conductive material.

9. The conductive ink according to claim 1 or 2, wherein the organic conductive material comprises an n-type conductive polymer.

10. The conductive ink according to claim 9, wherein the n-type conductive polymer is selected from an n-type conductive polymer having a structural formula represented by Formula I below: 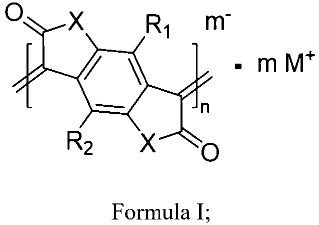 wherein X is O, S, or Se; m and n are both integers greater than 0; R₁ and R₂ are independently selected from at least one of H and C₁-C₁₀ alkyl, and M⁺ is a cation.

11. A preparation method of a conductive ink, comprising:
providing the components of the conductive ink according to any one of claims 1-10; and
mixing the organic conductive material and the solvent to obtain the conductive ink.

12. The preparation method according to claim 11, wherein the solvent comprises a good solvent, and
the step of mixing the organic conductive material and the solvent comprises: mixing the organic conductive material and the good solvent, and sequentially performing a first ultrasonic treatment and a first stirring treatment.

13. The preparation method according to claim 11, wherein the solvent comprises a good solvent and a poor solvent, and the step of mixing the organic conductive material and the solvent comprises:
mixing the organic conductive material and the good solvent, and sequentially performing a first ultrasonic treatment and a first stirring treatment to obtain a mixed solution of the organic conductive material and the good solvent; and
adding the poor solvent to the mixed solution, and sequentially performing a second ultrasonic treatment and a second stirring treatment.

14. The preparation method according to claim 12 or 13, wherein
the first ultrasonic treatment and/or the second ultrasonic treatment is performed at a power of 100 W to 200 W for an ultrasonic time of 0.5 hr to 1 hr; and/or
the first stirring treatment and/or the second stirring treatment is performed at a rotational speed of 1200 rpm to 1500 rpm for a stirring time of 0.5 hr to 4 hrs.

15. A conductive film, wherein the conductive film is made of the conductive ink according to any one of claims 1-10 or the conductive ink obtained by the preparation method according to any one of claims 11-14.

16. A conductive substrate, comprising:
a substrate layer and an electrode layer arranged on the substrate layer,
wherein the electrode layer comprises the conductive film according to claim 15.

17. An electrochromic film, wherein
the electrochromic film comprises: a first substrate layer, a first electrode layer, an electrochromic medium layer, a second electrode layer, and a second substrate layer stacked in sequence, wherein at least one of the first electrode layer and the second electrode layer comprises the conductive film according to claim 15;
or alternatively,
the electrochromic film comprises: a first substrate layer, a first electrode layer, an electrolyte layer, an electrochromic layer, a second electrode layer, and a second substrate layer stacked in sequence, wherein the first electrode layer comprises the conductive film according to claim 15, or both the first electrode layer and the second electrode layer comprise the conductive film according to claim 15;
or alternatively,
the electrochromic film comprises: a first substrate layer, a first electrode layer, an ion storage layer, an electrolyte layer, a second electrode layer and a second substrate layer which are stacked in sequence, wherein the second electrode layer comprises the conductive film according to claim 15, or the first electrode layer and the second electrode layer both comprise the conductive film according to claim 15;
or alternatively,
the electrochromic film comprises: a first substrate layer, a first electrode layer, an ion storage layer, an electrolyte layer, an electrochromic layer, a second electrode layer, and a second substrate layer stacked in sequence, wherein at least one of the first electrode layer, the second electrode layer, the ion storage layer, and the electrochromic layer comprises the conductive film according to claim 15.

18. An electrochromic device, comprising: at least one supporting substrate and the electrochromic film according to claim 17, wherein the at least one supporting substrate and the electrochromic film are stacked.

19. A terminal product, comprising: the electrochromic film according to claim 17 or the electrochromic device according to claim 18, wherein the terminal product comprises one of a rearview mirror, a curtain wall, a car sunroof, a car side window, a car windshield, a housing of an electronic product, glasses, a vehicle, and a display panel.
